Europäisches Patentamt

European Patent Office

Office européen des brevets

(11) Veröffentlichungsnummer : **0 117 392**
**B1**

(12) **EUROPÄISCHE PATENTSCHRIFT**

(45) Veröffentlichungstag der Patentschrift :
23.12.87

(51) Int. Cl.⁴ : **F 16 K   5/08**, F 16 K 41/04

(21) Anmeldenummer : **84100090.4**

(22) Anmeldetag : **07.01.84**

(54) **Lagerung für eine Schaltwelle in Absperrarmaturen.**

(30) Priorität : **28.01.83 DE 3302866**

(43) Veröffentlichungstag der Anmeldung :
**05.09.84 Patentblatt 84/36**

(45) Bekanntmachung des Hinweises auf die Patenterteilung : **23.12.87 Patentblatt 87/52**

(84) Benannte Vertragsstaaten :
**DE FR GB IT**

(56) Entgegenhaltungen :
**AU-B-   409 919**
**AU-B-   419 359**
**DE-A- 3 205 025**
**DE-B- 1 122 788**
**US-A- 3 443 816**
**US-A- 3 672 733**

(73) Patentinhaber : **DEUTSCHE AUDCO GMBH
Postfach
D-2081 Prisdorf bei Hamburg (DE)**

(72) Erfinder : **Hoyer, Ernst
Lohwurt 11
D-2000 Hamburg 54 (DE)**

(74) Vertreter : **Dipl.-Ing. H. Hauck Dipl.-Phys. W. Schmitz
Dipl.-Ing. E. Graalfs Dipl.-Ing. W. Wehnert Dr.-Ing. W. Döring
Neuer Wall 41
D-2000 Hamburg 36 (DE)**

**Beschreibung**

Die Erfindung bezieht sich auf eine Lagerung für eine Schaltwelle in Absperrarmaturen gemäß dem Oberbegriff des Anspruches 1.

Absperrorgane von Absperrarmaturen, wie Kugelküken oder Kegelküken in Kugel- oder Kegelhähnen werden normalerweise mit Hilfe einer sogenannten Schaltwelle betätigt. An der Außenseite der Schaltwelle ist ein Handrad, ein Hebel oder ähnliches zur manuellen Betätigung angebracht. Vielfach erfolgt die Betätigung der Schaltwelle auch durch einen elektrischen, pneumatischen oder hydraulischen Hilfsantrieb. Die durch das Gehäuse der Armaturen geführten Schaltwellen müssen wirksam gelagert und abgedichtet sein. Die Abdichtung ist notwendig, damit kein Medium nach außen dringt und etwa eine Umweltverschmutzung verursacht. Bei feuergefährlichen Produkten soll die Armatur und damit auch die Lagerung und Abdichtung der Schaltwelle gewährleisten, daß im Brandfalle eine Leckage nicht entsteht.

Aus der AU-B-409 919 ist ein Kugelhahn bekanntgeworden, bei dem die Schaltwelle einen radialen Bund aufweist. Der radiale Bund befindet sich innerhalb eines nach innen weisenden buchsenförmigen Ansatzes des Kugelhahngehäuses. In dem Raum zwischen dem Bund und dem buchsenartigen Ansatz ist eine ringförmige Dichtungspackung angeordnet. Eine Feder zwischen der Kugel und dem Bund drückt die Schaltwelle von der Kugel fort und die ringförmige Packung in den Raum oberhalb des Bundes hinein.

Der Erfindung liegt die Aufgabe zugrunde, eine Dichtung und Lagerung für die Schaltwelle von Absperrarmaturen mit drehbar gelagertem Absperrorgan, insbesondere für hohe und höchste Drücke und Nennweiten zu schaffen, die unter allen Belastungszuständen der Schaltwelle und/oder des Absperrorgans eine wirksame Abdichtung der Schaltwelle gegenüber dem Armaturengehäuse gewährleistet.

Diese Aufgabe wird gelöst durch die Merkmale des Kennzeichnungsteils des Anspruches 1.

Erfindungswesentlich ist, daß die der konischen Gehäuselagerfläche zugewandte Stirnseite des Ringes sphärisch ausgebildet ist und das Material des Ringes härter ist als das des Armaturengehäuses bzw. der Lagerfläche. Bei entsprechenden Drücken kommt es zu einem mehr oder weniger starken Eingraben der sphärischen Stirnseite in die konische Lagerfläche. Diese erhält dann auf diese Weise eine sphärische Gegenfläche, wodurch Ring und Lagerfläche nach Art einer Kugel und einer Kugelpfanne zusammenwirken. Diese sphärische Gegenfläche sorgt dafür, daß die sphärische Stirnseite des Ringes auch bei einem Verkanten des Ringes infolge eines Verkantens der Schaltwelle stets über den gesamten Umfang dichtend an der Gegenfläche anliegt. Erst durch diese Maßnahme ist es möglich, daß bei hohen Belastungen und unterschiedlichen Anschlägen der Schaltwelle in jedem Fall eine wirksame

Abdichtung zu erzielen ist.

Ein weiterer Vorteil der Erfindung besteht darin, daß die Oberflächengüte und die geometrische Genauigkeit gegenüber herkömmlichen Konstruktionen vermindert werden kann. Damit wird auch der Fertigungsaufwand geringer. Insbesondere die Fertigung der konischen Lagerfläche im Gehäuse ist normalerweise außerordentlich aufwendig. Bisher notwendige sogenannte Ausgleichsringe, die zum Ausgleich von Fluchtfehlern zwischen Schaltwelle und Absperrorgan verwendet werden, können entfallen.

Da bei der Erfindung eine metallische Abdichtung vorgesehen ist, ist sie auch feuersicher. Im Brandfalle werden Dichtungen aus üblichem Dichtungsmaterial zerstört. Die erfindungsgemäße Lagerung sichert eine Abdichtung somit auch bei höheren Temperaturen.

Das Material des Ringes ist z. B. gehärteter oder vergüteter Stahl.

Bei einer Ausgestaltung der Erfindung sind in die Stirnflächen des Ringes und/oder die Lagerflächen des Gehäuses und des Bundes zur Feinabdichtung Ringdichtungen eingelassen. Sie können nach einer weiteren Ausgestaltung der Erfindung aus PTFE oder Graphit sein. Alternativ können nach einer anderen Ausgestaltung der Erfindung die Stirnseiten des Ringes mit einer Gleitschicht versehen sein. Die Gleitschicht kann aus Polytetrafluoräthylen (PTFE) oder Molybdänsulfit bestehen. Dadurch werden die Kräfte, die zur überwindung der zur Anpassung notwendigen Gleitbewegungen erforderlich sind, sehr klein gehalten.

Insgesamt wird mit der Erfindung eine verschleißarme und unter allen Belastungszuständen gleichmäßige und wirksame Dichtung und Lagerung der Schaltwelle im Armaturengehäuse erhalten.

Zwei Ausführungsbeispiele der Erfindung werden nachfolgend anhand von Zeichnungen näher erläutert.

Fig. 1   zeigt einen Schnitt durch die Lagerung einer Schaltwelle nach der Erfindung für einen Kugelhahn.

Fig. 2   zeigt einen Schnitt durch die Lagerung einer Schaltwelle für einen Kegelhahn.

Die Zeichnungen sind lediglich schemahaft und nicht maßstäblich.

Ein nur angedeutetes Gehäuse 10 eines Kugelhahns besitzt eine Lagerbuchse 11 zur Aufnahme einer Schaltwelle 12. Die Schaltwelle 12 besitzt einen aus der Buchse 11 herausragenden Abschnitt 13, einen in der Buchse 11 gelagerten Abschnitt 14 sowie einen radialen Bund 15, der mit einem nicht gezeigten Kugelküken in Drehverbindung steht. Die Lagerbuchse 11 besitzt am oberen Ende an der Innenseite eine Ringausnehmung 28, in der eine Lippendichtung 29 aus elastomerem Material und ein Druckring 16 oberhalb der Lippendichtung 29 angeordnet sind. Der Abschnitt 13 hält in einer Nut einen Federring 17, der eine Zwischenscheibe 18 gegen den Druckring 16 hält.

Die Lagerbuchse 11 hat am inneren Ende eine konische Lagerfläche 19. Die Lagerfläche 19 konvergiert zur Achse der Schaltwelle 12. In der Lagerfläche ist eine Nut zur Aufnahme einer Ringdichtung 20, zum Beispiel aus PTFE, geformt.

Zwischen dem Bund 15 bzw. seiner nach oben gerichteten Stirnseite 21 und der Lagerfläche 19 ist ein Ring 22 angeordnet. Der Ring 22 besitzt zum Bund 15 hin eine plane Radialfläche 23 und zur Lagerfläche 19 hin eine sphärische Lagerfläche 24. Die Wölbung der sphärischen Lagerfläche 24 ist derart, daß sie wiederum in Richtung Schaltwellenachse konvergiert. In einer Nut der planen Fläche 23 ist wiederum eine Ringdichtung 25, zum Beispiel aus elastomerem Material angeordnet. Der Innendurchmesser des Ringes 22 ist nicht unwesentlich größer als der Außendurchmesser des Abschnitts 14 der Schaltwelle 12, so daß, wie bei 26 gezeigt, zwischen diesen Teilen ein großes Spiel besteht.

Der Ring 22 ist aus härterem Material als die Lagerbuchse 11 geformt, so daß sich bei entsprechendem Lagerdruck die sphärische Lagerfläche 24 in die kegelige Lagerfläche 19 « eingräbt » und eine sphärische Gegenlagerfläche bildet. Eine Feder 27 drückt Bund 15 und Ring 22 ständig nach oben und damit die Lagerflächen 24 und 19 gegeneinander. Eine seitliche Verlagerung der Schaltwelle 12 bedingt mithin eine Relativbewegung zwischen den planen Lagerflächen an Ring 22 und Bund 15. Die Lagerflächen 24, 19 bleiben hingegen ortsfest relativ zueinander. Eine Verkantung der Schaltwelle 12 führt zu einem Gleiten der Lagerflächen 19 und 24. In allen Fällen bleibt ein wirksamer Eingriff der Lagerfläche gleichmäßig um den gesamten Umfang aufrechterhalten und damit eine wirksame Dichtung auch dann, wenn durch Brand die Dichtung 20 und 25 zerstört sein sollten.

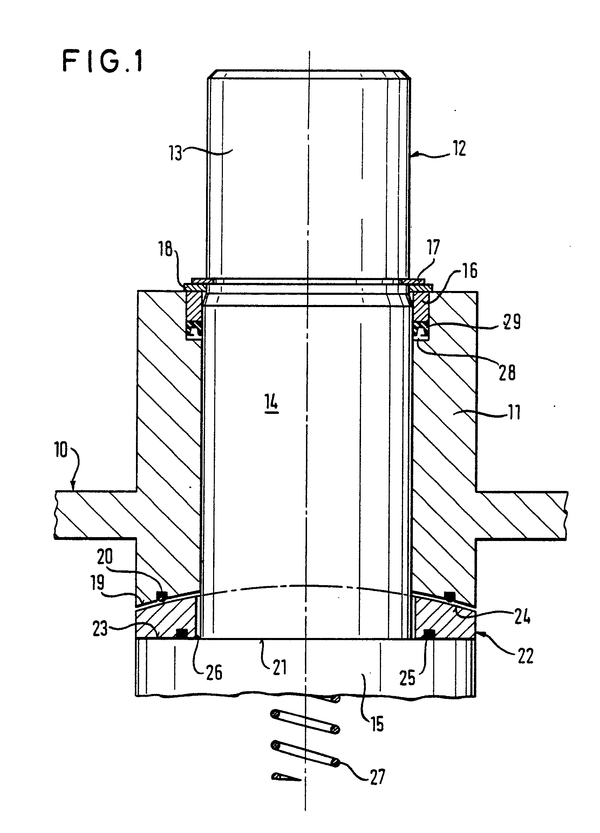

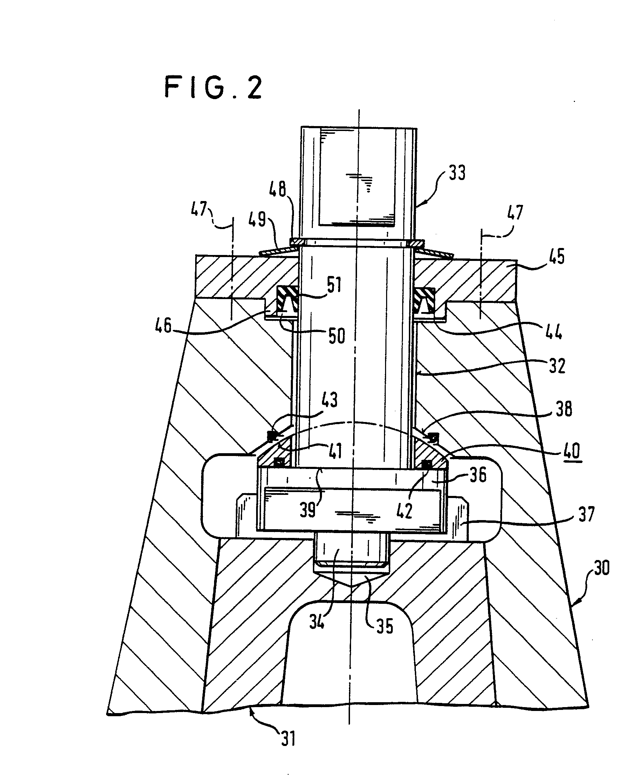

Fig. 2 zeigt den oberen Teil eines Hahngehäuses 30 mit einem Kegelküken 31. In einer Bohrung 32 des Gehäuses 30 ist eine Schaltwelle 33 gelagert, deren Durchmesser kleiner ist als der der Bohrung 32. Sie ist mittels eines Zapfens 34 am unteren Ende in eine Ausnehmung 35 des Kegelkükens 31 eingreift und zentriert wird. Ein radialer Ansatz 36 der Schaltwelle 33 wirkt mit einer nach oben offenen Nut 37 des Kegelkükens 31 zusammen, um diesen bei Drehung der Schaltwelle 31 in Drehung zu versetzen. Das Gehäuse 30 besitzt eine kegelige Lagerfläche 38 und der Bund 36 eine nach oben gerichtete plane Stirnfläche 39. Zwischen diesen Flächen ist wiederum ein Ring 40 aus härterem Material angeordnet mit einer sphärischen Lagerfläche 41, die zur kegeligen Lagerfläche 38 gerichtet ist. Die gegenüberliegende Stirnseite des Ringes 40 ist plan geformt. In die plane Stirnfläche des Ringes 40 ist eine Ringdichtung 42 eingelassen. Eine Ringdichtung 43 ist in die Lagerfläche 38 eingelassen. Ausgestaltung und Wirkungsweise des Rings 40 bzw. der anderen Lagerflächen entsprechen den entsprechenden Teilen der Darstellung nach Fig. 1,

so daß hierauf im einzelnen nicht mehr näher eingegangen zu werden braucht. Das Spiel zwischen Ring 40 und Welle 32 entspricht zweckmäßigerweise dem Spiel zwischen der Welle 33 und der Bohrung 32.

Wie aus Fig. 2 zu erkennen, weist das Gehäuse 30 an der Oberseite eine ringförmige Ausnehmung 44 auf. Auf die plane Oberseite des Gehäuses 30 ist eine Lagerscheibe 45 gelegt, die mit einem axialen Bund 46 in die Ausnehmung 44 eingreift. Mit Hilfe nicht gezeigter Schrauben ist die Lagerscheibe 45, wie bei 47 angedeutet, fest mit dem Gehäuse 30 verbunden. Ein in einer Nut der Schaltwelle 33 eingesetzter Federring 48 drückt eine Tellerfeder 49 gegen die Außenseite der Lagerscheibe 45.

Die Lagerscheibe hat eine Bohrung, durch die sich die Schaltwelle 33 hindurcherstreckt. In die Bohrungswand ist eine Nut 50 geformt, in der eine Lippendichtung 51 aus relativ weichem elastomerem Material eingesetzt ist.

Die Lagerscheibe 45 bildet ein zweites Radiallager für die Schaltwelle 33, die auch eine geringe Winkelabweichung zuläßt. Die Dichtung 51 ist austauschbar. Durch die gezeigte Konstruktion ist die Schaltwellenlagerung in der Lage, erhebliche durch die Fertigung bedingte Achsfehler zwischen Schaltwelle 33 und Küken 31 aufzunehmen, wodurch die Fertigung erheblich vereinfacht werden kann.

**Patentansprüche**

1. Lagerung für eine Schaltwelle (12, 33) in Absperrarmaturen, insbesondere für hohe und höchste Drücke und Nennweiten, mit einem Armaturengehäuse (10, 30), einer Schaltwelle (12, 33), die durch einen Abschnitt des Armaturengehäuses (10, 30) hindurchgeführt ist, die ferner kraftschlüssig mit einem Absperrorgan im Armaturengehäuse (10, 30) in Eingriff steht und die einen radialen Bund (15, 36) aufweist, einer Lagerfläche (19, 38) am unteren Ende des die Schaltwelle (12, 33) umgebenden Abschnitts (11), mit der der Bund (15, 36) zusammenwirkt, ferner mit einem zwischen dem Bund (15, 36) und dem Abschnitt angeordneten, die Schaltwelle (12, 33) umgebenden ringförmigen Dichtelement (22, 40) und einer auf die Schaltwelle (12, 33) wirkenden Feder, die den Bund (15, 36) vom Absperrorgan fort drückt, dadurch gekennzeichnet, daß die Lagerfläche (19, 38) am unteren Ende des Abschnitts (11) kegelig ausgebildet ist, daß das Dichtelement ein einstückig geformter Ring (22, 40) ist aus einem Material, welches härter ist als das Material der Lagerfläche (19, 38), daß der Ring (22, 40) die Schaltwelle (12, 33) so mit Spiel umgibt, daß die Abdichtung der Schaltwelle (12, 33) bei einer seitlichen Verschiebung des Ringes (22, 40) erhalten bleibt, daß die der Lagerfläche (19, 38) zugekehrte Stirnseite (24, 41) des Ringes (22, 40) sphärisch gewölbt und die andere Stirnseite (23) plan geformt ist und unmittelbar auf dem Bund (15, 36) aufliegt.

2. Lagerung nach Anspruch 1, dadurch gekennzeichnet, daß in den Stirnflächen des Ringes (22, 40) und/oder die Lagerflächen des Gehäuses und des Bundes zur Feinabdichtung Ringdichtungen (20, 25, 43, 42) eingelassen sind.

3. Lagerung nach Anspruch 2, dadurch gekennzeichnet, daß die Ringdichtungen (20, 25, 42, 43) aus Polytetrafluoräthylen (PTFE) oder Graphit bestehen.

4. Lagerung nach einem der Ansprüche 1 bis 3, dadurch gekennzeichnet, daß die Stirnseiten des Ringes (22, 40) mit einer Gleitschicht aus PTFE oder Molybdänsulfit versehen sind.

5. Lagerung nach einem der Ansprüche 1 bis 4, dadurch gekennzeichnet, daß die Lagerfläche (19, 38) an einer einteilig mit dem Armaturengehäuse (10, 30) geformten Lagerbuchse (11) ausgebildet ist.

### Claims

1. Bearing for a switching shaft (12, 33) in shut-off valves, in particular for high and maximum pressures and nominal widths, comprising a valve housing (10, 30), a switching shaft (12, 33) which extends through a portion of the valve housing (10, 30) and further is in non-positive engagement with a shut-off member in the valve housing (10, 30) and has a radial collar (15, 36), a bearing surface (19, 38) at the lower end of the portion (11) surrounding the switching shaft (12, 33) and cooperating with the collar (15, 36), an annular sealing element (22) disposed between the collar (15, 36) and said portion and surrounding the switching shaft (12, 33), and a spring acting on the switching shaft (12, 33) to urge the shut-off member away from the collar (15, 36), characterized in that the bearing surface (19, 38) at the lower end of the portion (11) is conical, that the sealing element is an integrally formed ring (22, 40) from a material harder than the material of the bearing surface (19, 38), that the ring (22, 40) surrounds the switching shaft (12, 33) with play such that sealing of the switching shaft (12, 33) is maintained upon a lateral displacement of the ring (22, 40), that the end face (24, 41) of the ring (22, 40) facing the bearing surface (19, 38) is spherical and the other end face (23) is plane and rests directly on the collar (15, 36).

2. Bearing as in claim 1, characterized in that annular seals (20, 25, 43, 42) are inserted for fine sealing purposes in the end faces of the ring (22, 40) and/or the bearing surfaces of the housing and the collar.

3. Bearing as in claim 2, characterized in that the annular seals (20, 25, 42, 43) are from polytetrafluorethylene (PTFE) or graphite.

4. Bearing as in any of claims 1 to 3, characterized in that the end faces of the ring (22, 40) are provided with a PTFE or molybdenum sulphite sliding layer.

5. Bearing as in any of claims 1 to 4, characterized in that the bearing surface (19, 38) is formed on a bearing bush (11) integrally formed with the valve housing (10, 30).

### Revendications

1. Palier pour un arbre de commande (12, 33) en robinetterie d'arrêt, en particulier pour des pressions et portées nominales grandes et très grandes, comprenant un boîtier de robinet (10, 30), un arbre de commande (12, 33) qui passe au travers d'une partie du boîtier de robinet (10, 30), est en prise, pour la transmission de forces, avec un organe de fermeture dans le boîtier de robinet (10, 30) et comporte un collet radial (15, 36), une surface de portée (19, 38) à l'extrémité inférieure de la partie (11) entourant l'arbre de commande (12, 33) avec laquelle coopère le collet (15, 36), et comprenant en outre un élément d'étanchéité annulaire (22) disposé entre le collet (15, 36) entourant l'arbre de commande (12, 33) et un ressort agissant sur l'arbre de commande (12, 33) qui comprime le collet (15, 36) en l'écartant de l'organe de fermeture, ledit palier étant caractérisé en ce que la surface de portée (19, 38) est constituée avec une forme conique à l'extrémité inférieure de la partie (11), en ce que l'élément d'étanchéité est un anneau (22, 40) fait d'une seule pièce en un matériau plus dur que celui des surfaces de portée (19, 38), en ce que l'anneau (22, 40) entoure l'arbre de commande (12, 33) avec jeu de façon que l'étanchéité de l'arbre de commande (12, 33) reste assuré en cas de déplacement latéral de l'anneau (22, 40), et en ce que la face frontale (24, 41) de l'anneau (22, 40) tournée vers la surface de portée (19, 38) a une forme sphérique bombée et l'autre face frontale (23) a une forme plane (23) et repose directement sur le collet (15, 36).

2. Palier selon la revendication 1, caractérisé en ce que des joints annulaires (20, 25, 43, 42) sont insérés dans les faces frontales de l'anneau (22, 40) et/ou dans les surfaces de portée du boîtier et du collet pour assurer une bonne étanchéité.

3. Palier selon la revendication 2, caractérisé en ce que les joints annulaires (20, 25, 42, 43) sont en polytétrafluoréthylène (PTFE) ou en graphite.

4. Palier selon l'une des revendications 1 à 3, caractérisé en ce que les faces frontales de l'anneau (22, 40) sont garnies d'une couche de glissement en PTFE ou en sulfite de molybdène.

5. Palier selon l'une des revendications 1 à 4, caractérisé en ce que la surface de portée est constituée sur un coussinet de palier (11) formé d'une pièce avec le boîtier de robinet (10, 30).

FIG.1

# FIG. 2